# EUROPÄISCHE PATENTANMELDUNG

(11) **EP 4 790 673 A1**
(43) Veröffentlichungstag der Anmeldung: **12.08.2026**
(21) Anmeldenummer: 26157129.3
(22) Anmeldetag: 09.02.2026
(51) Int. Cl.: G07D 11/16, G07D 11/20

(54) **VORRICHTUNG UND VERFAHREN ZUR TRANSPORTVORBEREITUNG EINES WERTDOKUMENTS UND VERFAHREN ZUM VERNICHTEN EINES WERTDOKUMENTS**

(30) Priorität: 11.02.2025 DE 102025104921
(71) Anmelder: Giesecke+Devrient Currency Technology GmbH, 81677 München (DE)
(72) Erfinder: EDLER, Philipp, 81677 München (DE)
(74) Vertreter: Ter Meer Steinmeister & Partner

(57) **Zusammenfassung**

Bereitgestellt wird unter anderem eine Vorrichtung zur Transportvorbereitung eines Wertdokuments bereitgestellt. Die Vorrichtung umfasst: eine Aufnahmevorrichtung zur Aufnahme des Wertdokuments; eine Entwertungsvorrichtung, die eingerichtet ist, das Wertdokument irreversibel sichtbar zu entwerten; eine Sammelvorrichtung, zum Ablegen des entwerteten Wertdokuments für einen Transport; eine Sensorvorrichtung, die eingerichtet ist, Sensordaten zu erfassen, die das Wertdokument identifizieren; und eine Steuervorrichtung. Die Steuervorrichtung ist eingerichtet, nach Entwertung des Wertdokuments das Wertdokument basierend auf den Sensordaten in einem unveränderlichen Eintrag auf einer Datenbank zu registrieren.

## Beschreibung

Die vorliegende Erfindung betrifft eine Vorrichtung zur Transportvorbereitung eines Wertdokuments. Beschrieben sind ferner eine Vorrichtung zur Echtheitsprüfung eines entwerteten Wertdokument und ein System, umfassend beide Vorrichtungen, zum Vernichten eines Wertdokuments. Die Erfindung betrifft weiterhin ein Verfahren zur Transportvorbereitung eines Wertdokuments und ein Verfahren zum Vernichten eines Wertdokuments.

Unter Wertdokumenten werden blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Sicherheitsmerkmale auf, deren Vorhandsein ein Indiz für die Echtheit, d.h. die Herstellung durch eine dazu befugte Stelle, ist. Wertdokumente können unterschiedliche Wertdokumenttypen haben. Wichtige Beispiele für solche Wertdokumenttypen sind Coupons, Gutscheine, Schecks, Pässe, Personalausweise, Führerscheine und insbesondere Banknoten. Im Fall von Banknoten können Wertdokumenttypen weiter unterschieden werden; im Rahmen der vorliegenden Erfindung kann ein Wertdokumenttyp gegeben sein durch die Währung und den Nennwert einer Banknote bzw. die Denomination sowie gegebenenfalls die Emission bzw. den Zeitraum, in dem diese offiziell, beispielsweise von Zentralbanken, ausgegeben wurden. Soweit sich die folgenden Erläuterungen auf Banknoten beziehen, gelten diese für jeden anderen Typ von Wertdokumenten entsprechend.

Der Wert eines Wertdokuments, setzt sich üblicherweise aus zwei Komponenten zusammen: Dem Nennwert, z. B. finanzieller Wert, und dem gegenständlichen Wert. Der gegenständliche Wert repräsentiert den Wert des physischen Produkts eines Wertdokuments, z. B. des Papiers einer Banknote, und hängt vom Zustand des Wertdokuments ab. Der Nennwert hingegen wird von dem Wertdokument repräsentiert, beispielsweise ein Geldbetrag einer Banknote.

Wertdokumente, insbesondere Banknoten, unterliegen aufgrund ihres Nennwerts beim Transport besonderen Sicherheitsanforderungen, um unautorisierten Zugriff zu verhindern. Diese Sicherheitsanforderungen verursachen erheblich höhere Transportkosten als die entsprechend reinen Logistikkosten. Als typische Transportszenarien kommen beispielsweise eine Rückführung überschüssigen Bargelds von Händlern und/oder Geschäftsbanken zur Zentralbank; eine Rückführung von abgenutzten oder beschädigten Banknoten zur Zentralbank, um auf Echtheit und Qualität geprüft zu werden; und bei Währungsumstellungen in Betracht. Diese Transporte werden in der Regel von spezialisierten Wertdienstleistern mit gepanzerten Fahrzeugen durchgeführt, um die Sicherheit des Bargelds zu gewährleisten.

Eine physische irreversible Entwertung findet aktuell nur bei der Zentralbank statt.

Aus WO 2007 / 061 377 A1 und WO 2014 / 077 754 A1 ist jeweils bekannt, dass Banknoten vor ihrem Transport basierend auf ihrem Identifikator im System als gesperrt registriert werden, um das Risiko eines Diebstahls zu verringern.

Ferner ist aus EP 0 314 999 A2 bekannt, dass Banknoten vor dem Transport durch berührungsfreie Aufdrucke, z. B. mittels eines Tintenstrahldruckers, entwertet werden, wobei die Aufdrucke durch einen nachgelagerten Markierungssensor auf Vollständigkeit überprüft werden. Derartige berührungsfreie Aufdrucke sollen gegenüber Entwertungslochungen oder gestempelten Entwertungsaufdrucken verhindern, dass bei den üblicherweise hohen Taktfrequenzen in der Banknotenverarbeitung während einer Entwertung von Banknoten Banknotenstaus entstehen.

Ferner sind Banknotenneutralisationssysteme bekannt, die den Transport von Banknoten absichern, indem diese bei ein unautorisiertem Zugriff Sicherheitstinte auf die Banknoten spritzen, wodurch die Banknoten permanent markiert und als Zahlungsmittel unbrauchbar werden.

Grundsätzlich kann bei den bisher bekannten Prozessen zur Transportvorbereitung von Wertdokumenten, insbesondere Banknoten, der Nennwert in der Regel erst nach physischem Eingang bei Empfänger und dessen Verifizierung des Wertdokuments gutgeschrieben werden.

Der Erfindung liegt daher die Aufgabe zugrunde, bestehende Prozesse und Vorrichtungen zur Transportvorbereitung zu vereinfachen. Der Erfindung liegt ferner die Aufgabe zugrunde, eine Vorrichtung und dazu korrespondierendes System sowie Verfahren bereitzustellen, um die Transportvorbereitung von Wertdokumenten zu demokratisieren, d. h. jedem zugänglich zu machen. Der Erfindung liegt weiter die Aufgabe zugrunde, eine schnellere Übertragung eines Nennwerts des Wertdokuments von Empfänger zu Sender beim Transport des Wertdokuments zu ermöglichen. Es ist eine weitere Aufgabe der Erfindung, Sicherheitsmaßnahmen bei der Auszahlung des Geldwerts von entwerteten Banknoten zu verbessern.

Zumindest eine dieser Aufgaben wird gelöst durch die Merkmale der unabhängigen Ansprüche. Weitere Ausgestaltungen sind in den abhängigen Ansprüchen angegeben.

In einem Aspekt der vorliegenden Offenbarung wird eine Vorrichtung zur Transportvorbereitung eines Wertdokuments bereitgestellt. Die Vorrichtung umfasst: eine Aufnahmevorrichtung zur Aufnahme des Wertdokuments; eine Entwertungsvorrichtung, die eingerichtet ist, das Wertdokument irreversibel sichtbar zu entwerten; eine Sammelvorrichtung, zum Ablegen des entwerteten Wertdokuments für einen Transport; eine Sensorvorrichtung, die eingerichtet ist, Sensordaten zu erfassen, die das Wertdokument identifizieren; und eine Steuervorrichtung. Die Steuervorrichtung ist eingerichtet, nach Entwertung des Wertdokuments das Wertdokument basierend auf den Sensordaten in einem unveränderlichen Eintrag auf einer Datenbank zu registrieren.

In einem weiteren Aspekt der vorliegenden Offenbarung wird eine Vorrichtung zur Echtheitsprüfung eines entwerteten Wertdokuments, insbesondere Banknote, bereitgestellt. Die Vorrichtung umfasst: eine Speichereinrichtung, in der Instruktionen zur Ausführung eines Auswerteverfahrens gespeichert sind; eine Sensorvorrichtung, die eingerichtet ist, Sensordaten zu erfassen, die das Wertdokument identifizieren, wobei das Wertdokument eine vorbestimmte Anzahl an Sicherheitselementen aufweist; eine Auswertevorrichtung, die basierend auf den Instruktionen zum Verifizieren einer Echtheit des entwerteten Wertdokuments eingerichtet ist. Das Verifizieren umfasst ein Verifizieren zumindest eines der Sicherheitselemente aus der vorbestimmten Anzahl an Sicherheitselementen basierend auf den Sensordaten; und ein Verifizieren einer Entwertung des Wertdokuments.

In einem weiteren Aspekt der vorliegenden Offenbarung wird ein Verfahren zum Vernichten eines Wertdokuments bereitgestellt. Das Verfahren umfasst in folgender Reihenfolge: Irreversibles und sichtbares Entwerten des Wertdokuments; Registrieren des entwerten Wertdokuments in einem unveränderlichen Eintrag einer Datenbank; Transportieren des entwerteten Wertdokuments; Verifizieren der Echtheit des entwerteten Wertdokuments; und Vernichten des Wertdokuments. Durch diese Reihenfolge (erst Entwerten, dann Registrieren) kann die Anzahl von Fehleinträge in der Datenbank in vorteilhafter Weise reduziert werden.

In einem weiteren Aspekt der vorliegenden Offenbarung wird ein Verfahren zur Echtheitsprüfung eines entwerteten Wertdokuments bereitgestellt. Das Verfahren umfasst: Zuführen des einen entwerteten Wertdokuments; Erfassen von Sensordaten, die das Wertdokument identifizieren, wobei die Sensordaten vorzugsweise einen Identifikator des Wertdokuments und einen Wert des Wertdokuments umfassen, wobei der Identifikator des Wertdokuments den Wert des Wertdokuments umfasst; Verifizieren zumindest eines der Sicherheitselemente aus der vorbestimmten Anzahl an Sicherheitselementen basierend auf den Sensordaten; und Verifizieren einer Entwertung des Wertdokuments.

In einem weiteren Aspekt der vorliegenden Offenbarung wird ein Verfahren zur Transportvorbereitung eines Wertdokuments bereitgestellt. Das Verfahren umfasst: Zuführen eines Wertdokuments; Entwerten des Wertdokuments durch: Zerstören eines vorbestimmten Sicherheitselements des Wertdokuments; und/oder Entfernen eines Ausschnitts, vorzugsweise eines vorbestimmten Musters, aus dem Wertdokument; und/oder Verändern eines Druckbildes des Wertdokuments; Erfassen von Sensordaten, die das Wertdokument identifizieren; und Registrieren des entwerten Wertdokuments in einem unveränderlichen Eintrag einer Datenbank basierend auf den Sensordaten.

In einem weiteren Aspekt der vorliegenden Offenbarung wird ein System zum Vernichten von Wertdokumenten bereitgestellt. Das System umfasst eine Vorrichtung zur Transportvorbereitung eines Wertdokuments gemäß einem Aspekt der vorliegenden Offenbarung; eine Datenbank, in die unveränderliche Einträge speicherbar sind; eine Transportvorrichtung zum Transport des entwerten Wertdokuments; und eine Vorrichtung zur Bearbeitung des entwerteten Wertdokuments. Die Vorrichtung zur Bearbeitung des entwerteten Wertdokuments umfasst eine Vorrichtung zur Echtheitsprüfung des entwerten Wertdokuments gemäß einem Aspekt der vorliegenden Offenbarung; und eine Vorrichtung zum Vernichten des entwerteten Wertdokuments.

Die Erfindung beruht auf dem Gedanken, Wertdokumente wertübertragend zu entwerten, d. h. den Nennwert eines Wertdokuments vom Wertdokument zu entkoppeln, wodurch der Wert des Wertdokuments vernachlässigbar wird, sodass das Wertdokument einfacher und kostengünstiger transportiert werden kann. Insbesondere in einer Ausgestaltung, in der sich Empfänger und Sender (Besitzer) kennen oder vertrauen, kann der entkoppelte Wert kontaktlos, vorzugsweise vom Empfänger, an den Besitzer (Sender) des Wertdokuments vor dem Empfang des Wertdokuments beim Empfänger übertragen werden. In einer alternativen Ausgestaltung, in der sich insbesondere Empfänger und Sender (=Besitzer) des Wertdokuments nicht kennen bzw. deren Verhältnis nicht vertrauenswürdig ist, kann der entkoppelte Wert des Wertdokuments erst nach Empfang des entwerteten Wertdokuments beim Empfänger gutgeschrieben werden. Insbesondere durch die Registrierung des entwerteten Wertdokuments in einem unveränderlichen Eintrag auf einer Datenbank kann die Zuordnung des Nennwerts zum Besitzer nicht manipuliert werden, selbst bei einem unautorisierten Zugriff auf das entwertete Wertdokument.

Eine irreversible sichtbare Entwertung ist im Kontext der vorliegenden Offenbarung eine Entwertung, die den Zustand des Wertdokuments unwiederbringlich verändert, beispielsweise physikalisch, etwa durch Entfernen eines Abschnitts des Wertdokuments, oder chemisch, etwa durch Verändern des Farbbilds des Wertdokuments. Die Entwertung ist sichtbar, d. h., offensichtlich und kann von jedem ohne technische Hilfsmittel erkannt werden. Somit kann der entwertete Zustand des Wertdokuments jederzeit zweifelsfrei und unmittelbar festgestellt werden. Durch die irreversible Entwertung kann ferner sichergestellt werden, dass die entwerteten Banknoten keinen potentiellen Wert für Dritte mehr haben.

Durch die Kombination von lokalem irreversiblem Entwerten des Wertdokuments, insbesondere Banknoten, und digitalem Verarbeiten bzw. Ausgleichen des Nennwerts des Wertdokuments könnte das Rezirkulieren von Wertdokumenten weiter gefördert werden. Hierbei kann insbesondere eine instantane Gutschrift des Nennwerts und ein zeitlich davon entkoppelter Rücktransport, z. B. zur Zentralbank, mit ressourcenschonenden Logistikkonzepten weiter vorteilhaft sein. Basierend auf dem Kern der Erfindung kann für Banknoten als Wertdokumente ein Einwegbargeld geschaffen werden. Diese Ausgestaltung kann besonders in Bargeldzyklen mit sehr spärlicher Infrastruktur vorteilhaft sein, da jeder Händler selbst geringe Mengen an Bargeld nicht kostenaufwendig abtransportieren muss, sondern im Wesentlichen selbst entwerten und dann "per Post" zurück zur Zentralbank schicken kann. Ferner könnte ein Endnutzer das Einzahlen von Bargeld quasi am Küchentisch machen, indem er die entsprechende Banknote selbst physikalisch entwertet, beispielsweise ausstanzt, die Echtheit der entwerten Banknote mittels eines mobilen Endgeräts, etwa Smartphone, hinreichend verifiziert (unter der Annahme, dass bekannte Methoden zur Echtheitsprüfung einer entwerteten Banknote mit Hilfe eines Smartphones hinreichend zuverlässig sind), und abschließend die entwerteten Banknoten an die Bank schickt. In einer Ausgestaltung könnten die entwerteten Banknoten sogar noch über mehrere Stationen weitergegeben werden, da zumindest ein Sicherheitsmerkmal der Banknote physikalisch noch verwendbar bleiben kann, wobei der Nennwert basierend auf dem unveränderlichen Eintrag der Datenbank digital transferierbar ist, beispielsweise durch Transaktionen in der Datenbank.

Die Vorrichtungen, Verfahren und/oder das System kann ferner ein oder mehrere der folgenden Merkmale umfassen.

Die Aufnahmevorrichtung kann eingerichtet sein, eine Vielzahl von Wertdokumenten aufzunehmen. Die Vorrichtung kann ferner eine Zuführvorrichtung zur Zuführung von einzelnen oder vereinzelten Wertdokumenten zur Entwertungsvorrichtung umfassen.

Die Vorrichtung zur Transportvorbereitung eines Wertdokuments kann als Banknotenbearbeitungsmaschine und/oder als Bank-/Geldautomaten (ATM / cash recycler) ausgebildet sein.

Die Datenbank kann als Blockchain ausgestaltet sein. Die Datenbank kann als Register einer Kryptowährung ausgestaltet sein, wobei der unveränderliche Eintrag durch ein Token repräsentiert sein kann. Die Datenbank kann als generische Datenbank ausgebildet sein, die in einem unveränderlichen Speicherbereich abgelegt ist. Dazu kann die Vorrichtung zur Transportvorbereitung eine Speichervorrichtung umfassen, die einen unveränderlichen Speicherbereich umfasst. Der unveränderliche Speicherbereich kann als ein write-once-read-many (WORM) Speicher ausgebildet sein. In einer alternativen Ausgestaltung wird der Zugriff auf den Speicher über eine Berechtigungsverwaltung geregelt, durch welche beispielsweise definiert ist, wer Schreibrechte, d. h., eine Berechtigung zum Schreiben in dem Speicherbereich, hat und/oder wer Löschrechte, d. h., eine Berechtigung zum Löschen in dem Speicherbereich, hat. Bevorzugt darf nur die Zentralbank die in dem Speicherbereich gespeicherten Daten löschen. Die Schreibrechte werden gegebenenfalls von der Zentralbank vergeben, bevorzugt nach vorheriger Authentisierung und weiter bevorzugt gilt das Schreibrecht nur für eine gewisse Zeitdauer, hat also ein Ablaufdatum.

Die Vorrichtung zur Transportvorbereitung des Wertdokuments kann ferner eine Kontakteingabevorrichtung zur Eingabe eines Kontakts des Besitzers des Wertdokuments oder der Vielzahl von Wertdokumenten umfassen. Die Steuervorrichtung kann ferner eingerichtet sein, in dem unveränderlichen Eintrag auf der Datenbank den Kontakt des Besitzers in Bezug zu den Sensordaten zu registrieren.

Der Kontakt des Besitzers kann eine Adresse, eine Telefonnummer, eine Kontonummer, eine IBAN, eine Token-Kontaktadresse und/oder eine Wallet-Adresse umfassen. In einer Ausgestaltung kann das Wallet anonym sein.

Die Sensordaten können einen Identifikator des Wertdokuments und einen Wert, insbesondere Nennwert, des Wertdokuments umfassen. Vorzugsweise kann der Identifikator des Wertdokuments den Wert des Wertdokuments umfassen. Der Identifikator des Wertdokuments kann eine Seriennummer sein, die das Wertdokument weltweit eindeutig identifiziert. Im Falle einer Banknote kann die Seriennummer den Nennwert der Banknote umfassen. Die Sensordaten können der Identifikator des Wertdokuments sein, beispielsweise eine maschinenlesbare Seriennummer.

Die Sensorvorrichtung kann eine Kamera umfassen, wobei die Sensordaten das Bild einer Kamera sein können. Die Sensordaten können einen maschinenlesbaren Code umfassen oder sein, der das Wertdokument eineindeutig identifiziert. Dazu kann die Sensorvorrichtung beispielsweise einen Magnetsensor und/oder einen optischen Sensor umfassen.

Die Steuervorrichtung kann eine Schnittstelle zum Empfangen der Sensordaten umfassen. Die Steuervorrichtung kann einen Prozessor umfassen. Die Steuervorrichtung kann ferner die Speichervorrichtung umfassen.

Die Vorrichtung zur Transportvorbereitung des Wertdokuments kann ferner eine Speichervorrichtung umfassen, in der die Datenbank gespeichert ist. Dadurch kann der Eintrag in die Datenbank lokal in der Vorrichtung verarbeitet werden. Die Speichervorrichtung kann einen unveränderlichen Speicherbereich umfassen.

Die Vorrichtung zur Transportvorbereitung des Wertdokuments kann ferner eine Kommunikationsvorrichtung zur Datenkommunikation mit einem externen Server umfassen. Die Datenbank auf dem externen Server verwaltet werden. Die Steuervorrichtung kann ferner eingerichtet sein, die Sensordaten, vorzugsweise den Identifikator, des Wertdokuments und/oder den Kontakt des Besitzers über die Kommunikationsvorrichtung dem externen Server zu übermitteln.

In der Datenbank, insbesondere in Verbindung mit dem unveränderlichen Eintrag, der das Wertdokument identifiziert, können weitere Daten erfasst werden. Diese weiteren Daten können vom Besitzer bereitgestellt werden, etwa mittels einer Eingabevorrichtung und/oder der Kontakteingabevorrichtung, oder mittels der Steuervorrichtung ermittelt bzw. bereitgestellt werden. Diese zusätzlichen Daten können Tracking-bezogene Informationen der Logistik, Zertifikate der Vorrichtung und/oder Banknotenbearbeitungsmaschine, Zeitstempel des Entwertungsprozesses und/oder geographische Informationen umfassen. Die zusätzlichen Daten können gemeinsam basierend auf den Sensordaten in dem unveränderlichen Eintrag der Datenbank abgelegt werden. Die zusätzlichen Daten können zur Auszahlung des Nennwerts des Wertdokuments, insbesondere durch einen sog. Smart Contract (nachfolgend auch als "selbstausführender Vertrag" bezeichnet), herangezogen werden. Durch die zusätzlichen Daten kann die (Prozess)Sicherheit weiter erhöht werden.

In einer Ausgestaltung kann das Schreiben in den unveränderlichen Eintrag der Datenbank einer Eingangskontrolle unterliegen. Diese Eingangskontrolle kann das Vorweisen eines vorbestimmten Zertifikats durch die Steuervorrichtung der Vorrichtung zur Transportvorbereitung umfassen. Der unveränderliche Eintrag in der Datenbank kann ein Ablaufdatum aufweisen. Ist das Ablaufdatum überschritten, beispielsweise nach 12 Monaten, kann der Eintrag in der Datenbank ohne Gutschreiben des Wertes gelöscht werden (automatisches Löschen von Fehleinträgen in der Datenbank).

Die Steuervorrichtung kann eingerichtet sein, eine digitale Kopie bzw. einen digitalen Zwilling des entwerteten Wertdokuments in dem unveränderlichen Eintrag der Datenbank zu speichern. Die digitale Kopie kann mit einem selbstausführenden Vertrag in dem unveränderlichen Eintrag der Datenbank verknüpft werden.

Die Steuervorrichtung kann ferner eingerichtet sein, Instruktionen zur Veranlassung einer Auszahlung des Werts des Wertdokuments an den Besitzer über dessen Kontakt bereitzustellen. Die Auszahlung des Werts des Wertdokuments kann an den Kontakt des Besitzers und somit an den Besitzer erfolgen. Die Instruktionen zur Veranlassung einer Auszahlung können den Wert bzw. Nennwert des Wertdokuments, z. B. den Geldbetrag einer Banknote, den Identifikator des Wertdokuments, z. B. die Seriennummer einer Banknote, und auszahlungsrelevante Informationen, wie den Kontakt des Besitzers, umfassen.

Die Steuervorrichtung kann ferner eingerichtet sein, basierend auf dem Identifikator einen selbstausführenden Vertrag in den unveränderlichen Eintrag der Datenbank zu registrieren. Der selbstausführende Vertrag kann Instruktionen zur Veranlassung einer Auszahlung des Werts des Wertdokuments an den Besitzer enthalten. Die Instruktionen können eine Bedingung zur Auszahlung des Werts des Wertdokuments an den Besitzer enthalten. Die Bedingung kann eine erfolgreiche Echtheitsprüfung des Wertdokuments umfassen. Der selbstausführende Vertrag kann eine "wenn-dann"-Verknüpfung umfassen, insbesondere eine Regel der Art "wenn das entwertete Wertdokument echt ist, dann wird der Nennwert des Wertdokuments ausbezahlt". Der selbstausführende Vertrag kann als ein Smart Contract ausgebildet sein.

In einer Ausgestaltung können die Instruktionen zur Auszahlung des Nennwerts des entwerteten Wertdokuments eine Regel umfassen, wonach dem Empfänger des entwerteten Wertdokuments bekannte Wertdokumentenbesitzer eine instantane Auszahlung erhalten, bevor das entwertete Wertdokument physisch beim Empfänger angekommen ist und verifiziert werden konnte. In diesem Fall kann die Auszahlung unmittelbar nach Registrierung des entwerteten Wertdokuments in der Datenbank erfolgen. Der Transport des entwerteten Wertdokuments und die Echtheitsverifizierung des entwerteten Wertdokuments können entsprechend nachgelagert erfolgen.

Die Datenbank kann eine Schnittstelle für Statusabfragen, z. B. basierend auf dem Identifikator des Wertdokuments, aufweisen. Die Statusabfragen können beispielsweise Hinweise auf einen Aufenthaltsort (etwa mittels einer in der Datenbank abgespeicherten Tracking-Information) der entwerteten Wertdokumente liefern. Sofern die Datenbank in der Speichervorrichtung der Transportvorbereitungsvorrichtung gespeichert ist, kann eine Eingabevorrichtung (z. B. die Kontakteingabevorrichtung) eingerichtet sein, die Statusabfrage zu empfangen und der Steuervorrichtung bzw. der Datenbank zur weiteren Verarbeitung weiterzuleiten. Ist die Datenbank extern, d. h., in einer Datenbankvorrichtung, gespeichert, kann die Schnittstelle durch die Datenbankvorrichtung bereitgestellt werden. Derartige Statusabfragen können die Transparenz des Wertdokumentvernichtungssystems erhöhen und dadurch dessen Akzeptanz und Sicherheit verbessern. Die Statusabfragen könnten insbesondere für Cash-In-Transport (CIT)-Unternehmen und/oder Banken von Interesse sein.

Die Entwertungsvorrichtung kann eingerichtet sein, das Wertdokument wie folgt zu entwerten: Zerstören eines vorbestimmten Sicherheitselements des Wertdokuments; und/oder Entfernen eines Ausschnitts, vorzugsweise eines vorbestimmten Musters, aus dem Wertdokument, z. B. durch Lochung; und/oder Verändern eines Druckbildes des Wertdokuments. Das Entwerten des Wertdokuments erfolgt als durch gezielte physikalische und/oder chemische Manipulation bzw. Veränderung des Erscheinungsbildes des Wertdokuments.

Das Wertdokument kann mehrere Sicherheitselemente aufweisen. Das physikalische Entwerten, beispielsweise Zerstören, eines vorbestimmten Sicherheitselements des Wertdokuments kann beispielsweise durch Lochen oder Stanzen erfolgen. Alternativ erfolgt diese physikalische Entwertung mittels eines Lasers. Nach der Entwertung kann das Wertdokument ein zerstörtes Sicherheitselement und mehrere intakte Sicherheitselemente aufweisen. Durch eine vorbestimmte Kombination aus zerstörten und intakten Sicherheitselementen kann die Echtheit des entwerteten Wertdokuments effizient verifiziert werden.

In einem Ausführungsbeispiel kann das Wertdokument eine optisch variable Druckfarbe, OVI für "optical variable ink" umfassen, die den Nennwert des Wertdokuments angibt, wobei das Zerstören eines vorbestimmten Sicherheitselements des Wertdokuments ein Ausschneiden, Lochen und/oder Stanzen der OVI umfasst. Beispielsweise kann eine Ecke des Wertdokuments, in der die Smaragdzahl angeordnet ist, abgetrennt bzw. abgeschnitten werden. Das Fehlen der OVI als Deaktivierungsmerkmal kann in einer Echtheitsverifikation des entwerteten Wertdokuments besonders effizient festgestellt werden. Anstelle oder in Kombination mit der Smaragdzahl können ein Hologramm, ein Wasserzeichen, ein Glanzstreifen, ein Sicherheitsfaden, ein fühlbares Druckbild und/oder ein gedrucktes UV-Element oder ein IR-Element auf dem Wertdokument zur physischen Entwertung des Wertdokuments zumindest teilweise oder vollständig zerstört werden.

Das Entfernen eines Ausschnitts, vorzugsweise eines vorbestimmten Musters, aus dem Wertdokument kann das Entfernen eines vorbestimmten Sicherheitselements umfassen. Der Ausschnitt, vorzugsweise das vorbestimmte Muster, sollte eine Ausdehnung aufweisen, die die Offensichtlichkeit der Entwertung fördert. Beispielsweise kann, falls das Wertdokument zwei Seriennummern aufweist, eine davon entfernt bzw. ausgestanzt werden.

Die Entwertungsvorrichtung kann einen Laserbearbeitungskopf umfassen, der eingerichtet ist, Teile des Wertdokuments zu entfernen bzw. auszuschneiden.

Die Vorrichtung zur Echtheitsprüfung eines entwerteten Wertdokuments kann ferner eine Steuervorrichtung umfassen, die eingerichtet ist, basierend auf einer erfolgreichen Echtheitsprüfung des entwerteten Wertdokuments eine Bestätigung der Echtheit des entwerteten Wertdokuments an einen externen Server zu übermitteln.

Die Steuervorrichtung der Vorrichtung zur Echtheitsprüfung des entwerteten Dokuments kann die Bestätigung der Echtheit des entwerteten Dokuments in einen weiteren unveränderlichen Eintrag der Datenbank schreiben. Der weitere Eintrag kann in Verbindung mit dem Eintrag basierend auf den Sensordaten des entwerteten Wertdokuments und/oder der Instruktionen zur Auszahlung des Nennwerts des entwerteten Wertdokuments gesetzt sein. Wenn das Wertdokument ohne Registrierung, d. h., beispielsweise zufällig oder mutwillig (zerrissene Banknote), Entwertet wurde kann der Eintrag basierend auf der Bestätigung der Echtheit nicht in Verbindung zu einem entsprechenden Eintrag basierend auf den Sensordaten gesetzt werden. In diesem Fall kann keine Auszahlung des Nennwerts der Banknote erfolgen, sondern müsste die entwertete Banknote ersetzt werden, was üblicherweise der Fall ist.

Jeder Eintrag in die Datenbank kann durch ein kryptografisches Geheimnis abgesichert sein. Das kryptographische Geheimnis kann beispielsweise durch die jeweilige Steuervorrichtung basierend auf den Sensordaten erzeugt werden. Dazu kann die Steuervorrichtung einen zufälligen physischen Marker und/oder einen aktuellen Zeitstempel bzw. eine zufällig ausgewählte öffentlich nicht zugängliche Information aus dem Entwertungsprozess ermitteln und in Kombination mit den jeweiligen (Nutz)Daten in den unveränderlichen Eintrag der Datenbank schreiben. Diese Absicherung kann sowohl die Vorrichtung zur Transportvorbereitung als auch die Vorrichtung zur Echtheitsverifikation betreffen.

Die Auswertevorrichtung der Vorrichtung zur Echtheitsprüfung eines entwerteten Wertdokuments kann eingerichtet sein, die Entwertung des Wertdokuments wie folgt zu verifizieren: Erkennen einer Zerstörung eines vorbestimmten Sicherheitselements des Wertdokuments; und/oder Erkennen einer Entfernung eines Ausschnitts, vorzugsweise eines vorbestimmten Musters, aus dem Wertdokument; und/oder Erkennen einer Veränderung eines Druckbildes des Wertdokuments, insbesondere durch Vergleich der Sensordaten mit Referenzdaten des Druckbildes.

Die Sensorvorrichtung der Vorrichtung zur Echtheitsprüfung kann mit der Auswertevorrichtung über eine Datenschnittstelle gekoppelt sein. Die Sensorvorrichtung kann eingerichtet sein, die Sensordaten des entwerteten Wertdokuments durch Verändern einer Messposition auf dem Wertdokument entlang einer von zumindest zwei Spuren, vorzugsweise parallelen Spuren, zu erfassen und die Sensordaten an die Auswertevorrichtung, vorzugsweise in Echtzeit, zu übertragen.

Das Verfahren zum Vernichten des Wertdokuments kann ferner umfassen: Veranlassen einer Auszahlung des Wertes des Wertdokuments nach dem irreversiblen und sichtbaren Entwerten des Wertdokuments.

Das Registrieren des entwerteten Wertdokuments kann ferner Folgendes umfassen: Erfassen von Sensordaten, die das Wertdokument identifizieren; und Registrieren des Wertdokuments in dem unveränderlichen Eintrag der Datenbank basierend auf den Sensordaten. Die Sensordaten können vorzugsweise einen Identifikator des Wertdokuments und einen Wert des Wertdokuments umfassen. Der Identifikator des Wertdokuments kann den Wert des Wertdokuments umfassen. Der Identifikator des Wertdokuments kann eine Seriennummer sein, die das Wertdokument weltweit eindeutig identifiziert. Im Falle einer Banknote kann die Seriennummer den Nennwert der Banknote umfassen oder auf diesen referenzieren. Der Identifikator kann erst beim Entwerten aufgebracht werden, beispielsweise durch Aufbringen einer Identifikationsnummer oder Identifikationsmusters (z.B. QR Code) mittels Laserbearbeitung, Aufdrucken oder manuelles Beschriften. Dabei wäre eine maschinelle Lesbarkeit des Identifikators vorteilhaft.

Das Wertdokument kann eine vorbestimmte Anzahl an Sicherheitselementen aufweisen.

Das Verfahren zur Echtheitsprüfung eines entwerteten Wertdokuments kann ferner umfassen: Erkennen einer Zerstörung eines vorbestimmten Sicherheitselements des Wertdokuments; und/oder Erkennen einer Entfernung eines Ausschnitts, vorzugsweise eines vorbestimmten Musters, aus dem Wertdokument; und/oder Erkennen einer Veränderung eines Druckbildes des Wertdokuments, insbesondere durch Vergleich der Sensordaten mit Referenzdaten des Druckbildes.

Das Verfahren kann ferner umfassen: Übermitteln einer Bestätigung der Echtheit des entwerteten Wertdokuments basierend auf einer erfolgreichen Echtheitsprüfung des entwerteten Wertdokuments.

Das Verfahren kann ferner umfassen: Empfangen eines Kontakts eines Besitzers des Wertdokuments; und Registrieren des Kontakts des Besitzers in Bezug zu den Sensordaten in der Datenbank.

Das Verfahren zum Vernichten von Wertdokumenten kann ferner umfassen: Erzeugen von Instruktionen zur Veranlassung einer Auszahlung des Werts des Wertdokuments an den Besitzer; und/oder Bereitstellen der Instruktionen, vorzugsweise durch Registrieren eines selbstausführenden Vertrags zur Auszahlung des Werts des Wertdokuments an den Besitzer bedingt durch eine erfolgreiche Echtheitsprüfung des Wertdokuments in dem unveränderlichen Eintrag der Datenbank.

In einer Ausführungsform kann das Wertdokument einen Chip bzw. einen Schaltkreis, insbesondere RFID-Schaltkreis, umfassen, um digitale Informationen auf dem Wertdokument zu speichern. Dabei kann der Identifikator des Wertdokuments ein auf dem Wertdokument gespeicherter Identifikator bzw. "unique identifiert" sein, der maschinenlesbar ist und dadurch einfacher erfasst werden kann, sowohl bei der Entwertung als auch bei der Echtheitsverifizierung.

In einer Ausführungsform, wonach das Wertdokument einen Schaltkreis umfasst, kann ein kryptografisches Zertifikat und/oder ein privater Teil eines kryptografischen Schlüssels auf dem Wertdokument gespeichert sein. Dabei kann jedes Wertdokument einen individuellen kryptografischen Schlüssel umfassen, basierend auf dem der Eintrag in der Datenbank abgesichert werden kann. Hierzu kann in der Datenbank ein Mechanismus vorgesehen sein, wonach derselbe kryptographische Schlüssel jeweils nur exakt einmal zur Registrierung des entwerteten Wertdokuments verwendet werden darf, sodass dasselbe entwertete Wertdokument nicht mehrfach registriert werden kann.

Im Folgenden werden die Erfindung oder weitere Ausführungsformen und Vorteile der Erfindung anhand von Zeichnungen näher erläutert, wobei die Zeichnungen nur Ausführungsformen der Erfindung beschreiben. Gleiche Bauteile sind in den Zeichnungen mit den gleichen Bezugszeichen versehen. Elemente, die mit gestrichelten Linien gezeichnet sind, werden als optionale Elemente betrachtet.

Die Zeichnungen sind nicht als maßstabsgetreu anzusehen, und einzelne Elemente der Zeichnungen können übertrieben groß oder übertrieben vereinfacht dargestellt sein. Es zeigen:
- Fig. 1: ein Beispiel eines schematischen Aufbaus einer Vorrichtung zur Transportvorbereitung eines Wertdokuments;
- Fig. 2: ein Beispiel eines schematischen Aufbaus einer Vorrichtung zur Echtheitsverifizierung eines entwerteten Wertdokuments;
- Fig. 3: ein Beispiel eines schematischen Aufbaus eines Systems zum Vernichten von Wertdokumenten;
- Fig. 4: ein Beispiel eines schematischen Ablaufdiagramms eines Verfahrens zum Vernichten von Wertdokumenten mit entsprechender Gutschrift;
- Fig. 5: ein Beispiel eines schematischen Ablaufdiagramms eines Verfahrens zur Transportvorbereitung eines Wertdokuments;
- Fig. 6: ein Beispiel eines schematischen Ablaufdiagramms eines Verfahrens zur Echtheitsverifikation eines entwerteten Wertdokuments.

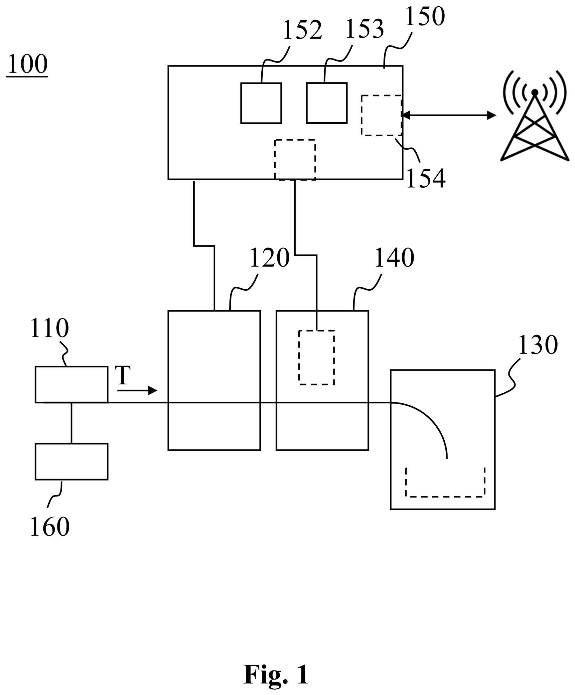

Eine Wertdokumentbearbeitungsvorrichtung in Fig. 1, im Beispiel ausgebildet als Vorrichtung 100 zur Transportvorbereitung eines Wertdokuments, ist zur irreversiblen und sichtbaren Entwertung und anschließender Registrierung des entwerteten Wertdokuments ausgebildet.

Die Vorrichtung 100 kann über eine Aufnahmevorrichtung 110 zum Aufnehmen von Wertdokumenten, eine Sammelvorrichtung 130 zur Abgabe bzw. Ablage bearbeiteter, d. h. entwerteter und registrierter Wertdokumente, und eine Transportvorrichtung (nicht gezeigt) zum Transportieren von einzelnen oder vereinzelten Wertdokumenten von der Aufnahmevorrichtung 110 zu der Sammelvorrichtung 130 entlang der Transportrichtung T umfassen.

Auf dem Transportweg zwischen der Aufnahmevorrichtung 110 und der Sammelvorrichtung 130 kann ein einzelnes oder vereinzeltes Wertdokument eine Entwertungsvorrichtung 120 zum Entwerten des Wertdokuments durchlaufen. Die Entwertungsvorrichtung kann eingerichtet sein, das Wertdokument durch Entfernen eines Teils des Wertdokuments, z. B. durch (Laser-)Stanzen, Lochen, Schneiden, etc., und/oder chemisch, etwa durch eine Farbveränderung des Wertdokuments, irreversibel und offensichtlich zu entwerten. Die Entwertungsvorrichtung 120 kann durch eine Steuervorrichtung 150 gesteuert werden.

Die Steuervorrichtung 150 kann eine Speichervorrichtung 152 umfassen, wobei in der Speichervorrichtung 152 Instruktionen gespeichert sein können, die, bei deren Ausführung durch die Steuervorrichtung 150, beispielsweise die Entwertungsvorrichtung 120 veranlassen, einen Entwertungsprozess durchzuführen. In der Speichervorrichtung 152 kann ferner eine Datenbank gespeichert sein (nicht gezeigt), in die unveränderliche Einträge speicherbar sind. Die Steuervorrichtung 150 kann ferner einen Prozessor 153 umfassen. Die Steuervorrichtung 150 kann eine Kommunikationsschnittstelle 154 umfassen. Mittels der Kommunikationsschnittstelle 154 kann die Steuervorrichtung 150 eine Datenkommunikation mit einem externen Server aufbauen, etwa, um Daten in unveränderliche Einträge einer externen Datenbank (nicht gezeigt) zu schreiben.

Die Vorrichtung 100 umfasst ferner eine Sensorvorrichtung 140 mit zumindest einem Sensor, der in Fig. 1 durch ein gestricheltes Kästchen symbolisiert ist. Die Sensorvorrichtung 140 kann einen optischen Sensor, beispielsweise eine Kamera, und/oder einen magnetischen Sensor, umfassen. Die Sensorvorrichtung 140 ist eingerichtet, Sensordaten zu erfassen, die das Wertdokument identifizieren. Diese Sensordaten können einen Identifikator, z. B. eine Seriennummer, umfassen oder sein.

Die Steuervorrichtung ist eingerichtet, nach Entwertung des Wertdokuments das Wertdokument basierend auf den Sensordaten in einem unveränderlichen Eintrag auf einer Datenbank (nicht gezeigt) zu registrieren. Durch diese Registrierung kann der Wert bzw. Nennwert des Wertdokuments digitalisiert werden und von dem entwerteten Wertdokument entkoppelt werden.

Die Vorrichtung 100 kann ferner eine Kontakteingabevorrichtung umfassen, durch die der Besitzer seinen Kontakt bereitstellen kann. Der Kontakt kann zusammen mit den Sensordaten in dem unveränderlichen Eintrag auf der Datenbank gespeichert werden, oder in einem weiteren unveränderlichen Eintrag, der mit dem Eintrag basierend auf den Sensordaten verknüpft ist, gespeichert werden.

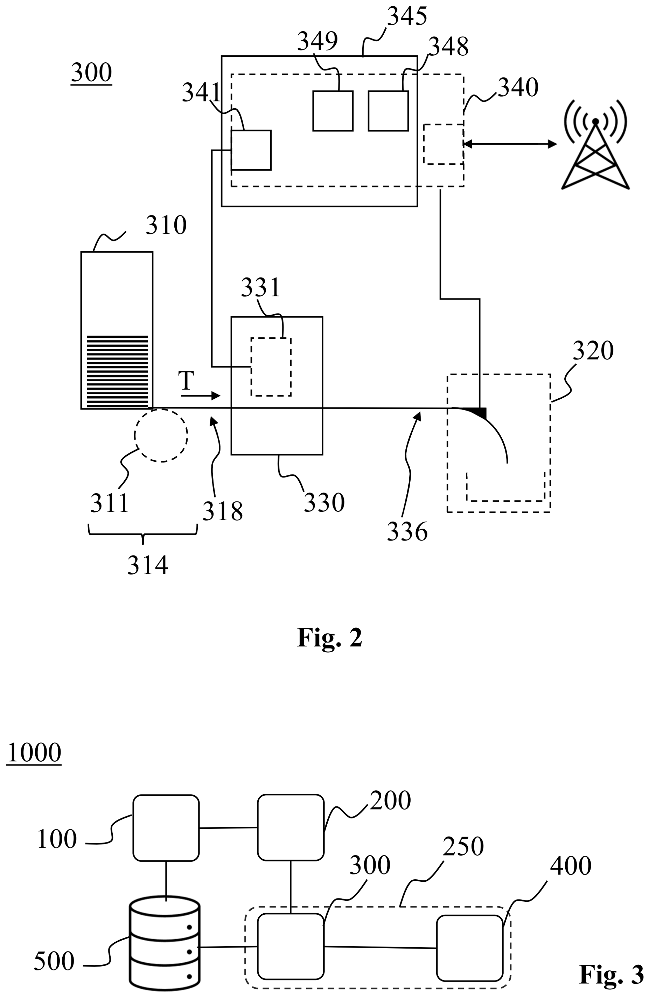

Eine Wertdokumentbearbeitungsvorrichtung in Fig. 2, im Beispiel ausgebildet als Vorrichtung 300 zur Verifizierung des entwerteten Wertdokuments und zur Verifizierung der Entwertung des Wertdokuments ausgebildet.

Die Vorrichtung 300 kann über eine Zuführvorrichtung 314 zum Zuführen von Wertdokumenten, eine Ausgabevorrichtung 320 zur Abgabe bzw. Ablage bearbeiteter, d. h. verifizierter Wertdokumente, und eine Transportvorrichtung 318 zum Transportieren von einzelnen oder vereinzelten Wertdokumenten von der Zuführvorrichtung 314 zu der Ausgabevorrichtung 320 auf dem Transportpfad 336 entlang der Transportrichtung T umfassen. Die Zuführvorrichtung 314 kann eine Aufnahmevorrichtung 310 von entwerteten Wertdokumente, vorzugsweise stapelweise, und einen Vereinzeler 311 umfassen.

Auf dem Transportweg zwischen der Zuführvorrichtung 314 bzw. der Aufnahmevorrichtung 310 und der Ausgabevorrichtung 320 kann ein einzelnes oder vereinzeltes entwertetes Wertdokument eine Sensorvorrichtung 330 zum Erfassen von Sensordaten zur Echtheitsverifikation des entwerteten Wertdokuments durchlaufen.

Die Sensorvorrichtung 330 kann zumindest einen Sensor 331 umfassen, der eingerichtet ist, Sensordaten zu erfassen, die die Sicherheitselemente des Wertdokuments widerspiegeln. Das Wertdokument kann mehrere Sicherheitselemente aufweisen, die dazu dienen, das Wertdokument gegenüber Fälschungen unterscheidbar zu machen.

Die Vorrichtung 300 kann ferner eine Auswertevorrichtung 345 umfassen, die zum Verifizieren einer Echtheit des entwerteten Wertdokuments eingerichtet ist. Dazu kann die Auswertevorrichtung 345 eine Datenschnittstelle 341 zum Empfangen der Sensordaten der Sensorvorrichtung 330 umfassen. Ferner kann die Auswertevorrichtung einen Prozessor 348 und eine Speichervorrichtung 349 umfassen. In der Speichervorrichtung 349 können Instruktionen zur Ausführung eines Auswerteverfahrens gespeichert sein.

Die Auswertevorrichtung 345 kann eingerichtet sein, zumindest eines der Sicherheitselemente aus der vorbestimmten Anzahl an Sicherheitselementen basierend auf den Sensordaten zu verifizieren. Die Auswertevorrichtung 345 kann ferner eingerichtet sein, zumindest zwei Sicherheitselemente und/oder eine vorbestimmte Kombination von Sicherheitselementen basierend auf den Sensordaten zu verifizieren.

Die Auswertevorrichtung 345 kann eingerichtet sein, eine Entwertung des Wertdokuments zu verifizieren. Dazu kann die Auswertevorrichtung 345 Abweichungen in den Sensordaten bezüglich eines vorbestimmten Sicherheitselements und/oder des Erscheinungsbildes des entwerteten Wertdokuments in Bezug auf ein intaktes Wertdokument desselben Wertdokumententyps ermitteln. In der Speichervorrichtung 349 können z. B. Referenzdaten bezüglich eines vorbestimmten Sicherheitselements und/oder des Erscheinungsbildes eines intakten Wertdokuments gespeichert sein, die zur Verifizierung der Entwertung des Wertdokuments herangezogen werden können. Die Auswertevorrichtung 345 kann eingerichtet sein, die Entwertung des Wertdokuments basierend auf einem vorbestimmten Muster, insbesondere Lochmuster, zu verifizieren. Beispielsweise können Wertdokumente in der Entwertungsvorrichtung 120 (Fig. 1) mittels einer vorbestimmten Lochmusters, wie ein vieleckiges Loch, ein Stern, ein Loch mit einer geschwungenen Kante, mehrere Löcher in einer vorbestimmten Konfiguration, etc. entwertet werden. Die Auswertevorrichtung 345 kann eingerichtet sein, das entsprechende Lochmuster in den Sensordaten des entwerteten Wertdokuments zu suchen und, wenn vorhanden, die Entwertung des Wertdokuments zu bestätigen.

Die Vorrichtung 300 kann ferner eine Steuervorrichtung 340 umfassen. Die Steuervorrichtung 340 kann mit der Auswertevorrichtung 345 kombiniert sein, beispielsweise auf denselben Prozessor 348 und/oder dieselben Speichervorrichtung 349 zugreifen. Die Steuervorrichtung 340 kann eine Kommunikationsvorrichtung aufweisen, die in Fig. 2 durch ein gestricheltes Kästchen symbolisiert ist. Mittels der Kommunikationsvorrichtung kann die Steuervorrichtung 340 eine Datenkommunikation zu einem externen Server aufbauen, z. B. zu einer Datenbankvorrichtung (nicht gezeigt). Insbesondere kann die Steuervorrichtung 340 eine Bestätigung der Echtheit des entwerteten Wertdokuments an einen externen Server übermitteln und/oder in einen unveränderlichen Beitrag der Datenbank schreiben.

Fig. 3 zeigt ein Beispiel eines schematischen Aufbaus eines Systems 1000 zum Vernichten von Wertdokumenten.

Das System 1000 umfasst eine Vorrichtung 100 zur Transportvorbereitung eines Wertdokuments, z. B. wie mit Bezug zu Fig. 1 beschrieben. Das System 1000 umfasst ferner eine Vorrichtung 300 zur Echtheitsverifikation eines entwerteten Wertdokuments, z. B. wie mit Bezug zu Fig. 2 beschrieben. Für den Transport des entwerteten Wertdokuments nach dessen Entwertung mittels der ersten Vorrichtung 100 zur zweiten Vorrichtung 300 umfasst das System eine Transportvorrichtung 200. Die Transportvorrichtung unterliegt keinerlei besonderen Sicherheitsanforderungen, da die zu transportierenden Wertdokumente bereits entwertet sind, und nur noch maximal einen gegenständlichen Wert aufweisen. Die Transportvorrichtung kann daher durch einen herkömmlichen Logistikdienstleister verwirklicht bzw. bereitgestellt werden.

Das System 1000 umfasst ferner eine Vorrichtung 400 zum Vernichten des entwerteten Wertdokuments. Die Vorrichtung 400 kann eine herkömmliche Wertdokumentvernichtungsvorrichtung sein, wie etwa bei Zentralbanken im Betrieb.

Die Vorrichtung 300 zur Echtheitsverifikation eines entwerteten Wertdokuments du die Vorrichtung 400 zum Vernichten des entwerteten Wertdokuments können in einer gemeinsamen Vorrichtung Bearbeitung des entwerteten Wertdokuments zusammengefasst sein.

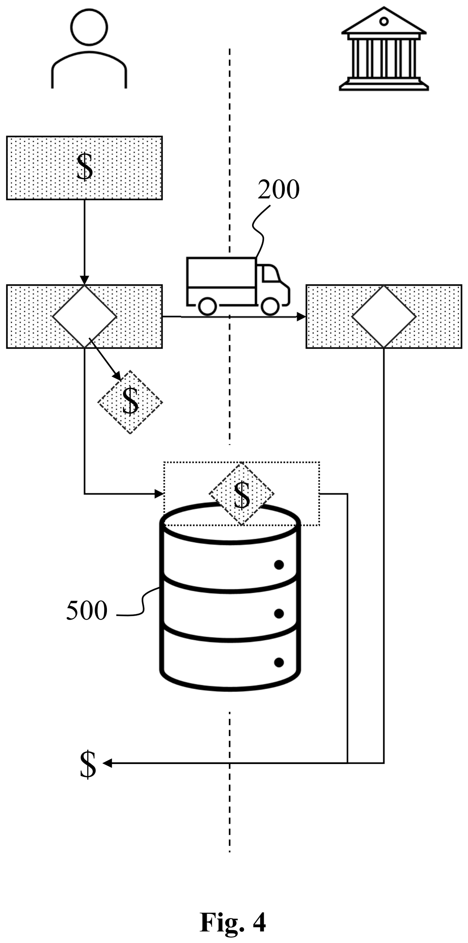

Das System 1000 umfasst ferner eine Datenbank 500, in die unveränderliche Einträge geschrieben werden können. Die Datenbank 500 kann in der Vorrichtung 100 zur Transportvorbereitung des Wertdokuments, in der Vorrichtung 300 zur Echtheitsverifikation des entwerteten Wertdokuments und/oder auf einem externen Server gespeichert sein. Die Datenbank 500 kann über entsprechende Schnittstellen verfügen, um Daten jeweils von der der Vorrichtung 100 zur Transportvorbereitung des Wertdokuments, in der Vorrichtung 300 zur Echtheitsverifikation des entwerteten Wertdokuments und/oder einem Endgerät eines Endverbrauchers zu empfangen. Die Funktion der Datenbank 500 ist in Bezug zu Fig. 4 näher ausgeführt.

Fig. 4 zeigt ein Beispiel eines schematischen Ablaufdiagramms eines Verfahrens zum Vernichten von Wertdokumenten mit entsprechender Gutschrift an den Besitzer des zu vernichtenden Wertdokuments.

In Fig. 4 ist auf der linken Spalte die Sphäre des Besitzers des Wertdokuments, im Beispiel als Banknote mit einem durch ein Dollarzeichen symbolisierten Geldwert, dargestellt. Auf der rechten Spalte ist in Fig. 4 die Sphäre der Zentralbank dargestellt.

Der Besitzer besitzt ein Wertdokument, das er/sie entwerten möchte. Hierzu wird das Wertdokument zunächst physisch entwertet. Das Wertdokument kann entwertet werden durch Zerstören eines vorbestimmten Sicherheitselements des Wertdokuments; und/oder Entfernen eines Ausschnitts, vorzugsweise eines vorbestimmten Musters, aus dem Wertdokument; und/oder Verändern eines Druckbildes des Wertdokuments. Die Entwertung kann mittels einer Vorrichtung 100 wie mit Bezug zu Fig. 1 beschrieben durchgeführt werden.

Unmittelbar anschließend an die Entwertung des Wertdokuments wird das Wertdokument maschinell identifiziert, nämlich durch Erfassen von Sensordaten des entwerteten Wertdokuments und Auswerten der erfassten Sensordaten. Das Identifizieren umfasst nicht das Verifizieren der Entwertung des entwerteten Wertdokuments. Die Entwertung des Wertdokuments muss jedoch ein Identifizieren des Wertdokuments noch ermöglicht lassen, d. h., bei der Entwertung sollte nicht alle verfügbaren Identifikatoren gleichermäßen zerstört werden.

Basierend auf den Sensordaten, insbesondere auf dem Identifikator des entwerteten Wertdokuments wird das entwertete Wertdokument in einem unveränderlichen Eintrag einer Datenbank 500 registriert, vorzugsweise zusammen mit einer Kontakteingabe des Besitzers. Der unveränderliche Eintrag auf der Datenbank 500 kann an einen selbstausführenden Vertrag, der ebenfalls in der Datenbank 500 abgelegt sein kann, verknüpft sein. Durch den selbstausführenden Vertrag kann der Geldwert des entwerteten Wertdokuments bei erfolgreicher Echtheitsverifizierung des entwerteten Wertdokuments vollständig automatisiert dem Besitzer gutgeschrieben werden.

Das entwertete Wertdokument, in Fig. 4 durch eine ausgestanzte Raute symbolisiert, kann beispielsweise durch die Transportvorrichtung 200 zur Zentralbank transportiert werden. Die Zentralbank bzw. der Empfänger des entwerteten Wertdokuments, kann, unter anderem mittels einer Vorrichtung 300 wie in Bezug zur Fig. 2 beschrieben, die Echtheit des entwerteten Wertdokuments verifizieren. Bei erfolgreicher Verifikation sowohl des Wertdokuments als auch der Entwertung des Wertdokuments kann in einem unveränderlichen Eintrag auf der Datenbank 500 eine Bestätigung der Echtheit des entwerteten Wertdokuments geschrieben werden. Dabei kann in Kombination mit dem unveränderlichen Eintrag basierend auf den Sensordaten und/oder der Kontakteingabe zweifelsfrei ermittelt werden, dass der Nennbetrag des entwerteten Wertdokuments, im Beispiel der Geldbetrag, dem Besitzer gutzuschreiben ist. Durch den selbstausführenden Vertrag kann eine derartige Gutschrift z. B. vollkommen automatisiert und ohne Zugriff durch Dritte ausgeführt werden. Dadurch kann der Sicherheitsaspekt bei der Auszahlung des Nennbetrags des entwerteten Wertdokuments weiter verbessert werden.

Nach erfolgreicher Auszahlung des Nennwerts des entwerteten Wertdokuments kann das entwertete Wertdokument vernichtet werden.

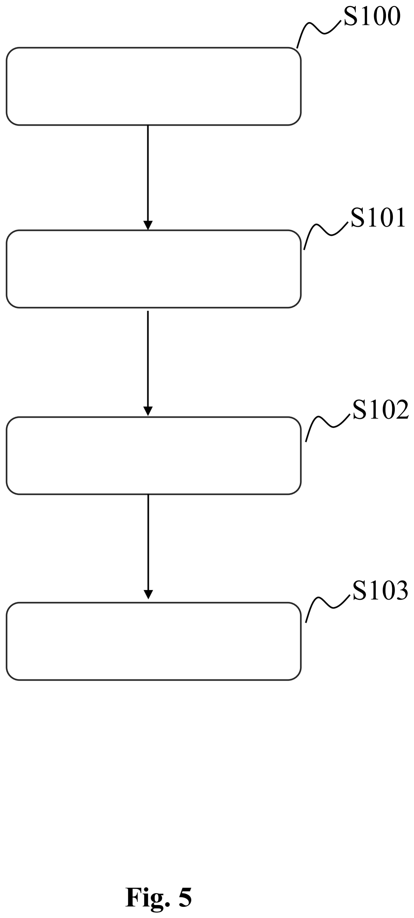

In Fig. 5 ist ein Beispiel eines schematischen Ablaufdiagramms eines Verfahrens zur Transportvorbereitung eines Wertdokuments dargestellt.

Das Verfahren umfasst einen ersten Verfahrensschritt 100, wonach das zu entwertende Wertdokument einer Wertdokumentbearbeitungsvorrichtung, etwa der Vorrichtung 100, zugeführt wird.

Das Verfahren umfasst einen zweiten Verfahrensschritt 101, wonach das zu entwertende Wertdokument entwertet wird, vorzugsweise in einer Wertdokumentbearbeitungsvorrichtung, etwa der Vorrichtung 100.

Das Verfahren umfasst einen dritten Verfahrensschritt 102, wonach Sensordaten von dem entwerteten Wertdokument zum Identifizieren des entwerteten Wertdokuments erfasst werden.

Das Verfahren umfasst einen vierten Verfahrensschritt 103, wonach das entwertete Wertdokument basierend auf den Sensordaten, insbesondere einem Identifikator, in einem unveränderlichen Eintrag auf der Datenbank 500 registriert wird.

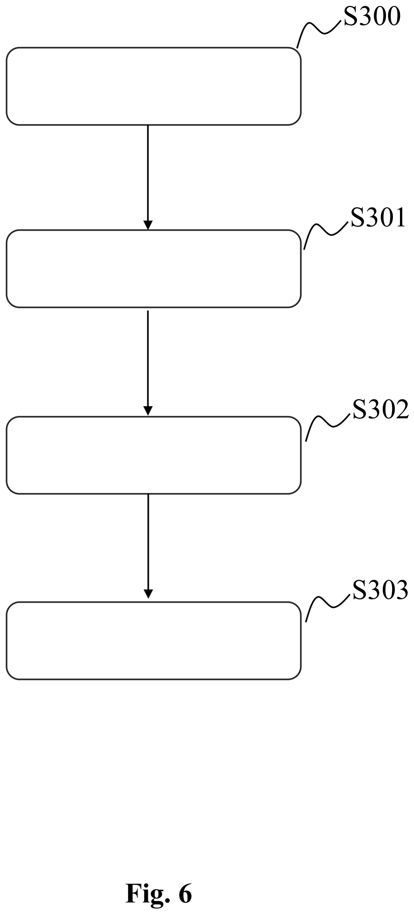

In Fig. 6 ist ein Beispiel eines schematischen Ablaufdiagramms eines Verfahrens zur Echtheitsverifikation eines entwerteten Wertdokuments dargestellt.

Das Verfahren umfasst einen ersten Verfahrensschritt 300, wonach das zu entwertende Wertdokument einer Wertdokumentbearbeitungsvorrichtung, etwa der Vorrichtung 300, zugeführt wird.

Das Verfahren umfasst einen zweiten Verfahrensschritt 301, wonach Sensordaten von dem entwerteten Wertdokument erfasst werden, vorzugsweise mittels einer Sensorvorrichtung einer Wertdokumentbearbeitungsvorrichtung, etwa der Vorrichtung 300.

Das Verfahren umfasst einen dritten Verfahrensschritt 302, wonach basierend auf den Sensordaten von dem entwerteten Wertdokument zumindest eines, vorzugsweise zwei oder mehr, der Sicherheitselemente des entwerteten Wertdokuments verifiziert wird.

Das Verfahren umfasst einen vierten Verfahrensschritt 403, wonach basierend auf den Sensordaten von dem entwerteten Wertdokument die Entwertung des entwerteten Wertdokuments verifiziert wird.

Durch eine Bestätigung der Echtheit des entwerteten Wertdokuments kann der Empfänger des entwerteten Wertdokuments die Auszahlung des Nennwerts des entwerteten Wertdokuments veranlassen. Hierzu kann ein in der Datenbank 500 hinterlegter selbstausführender Vertrag zur Anwendung kommen, wie mit Bezug zu Fig. 4 erläutert.

### Bezugszeichenliste:

- 100: Vorrichtung zur Transportvorbereitung eines Wertdokuments
110 Aufnahmevorrichtung
120 Entwertungsvorrichtung
130 Sammelvorrichtung
140 Sensorvorrichtung
150 Steuervorrichtung
152 Speichervorrichtung
153 Prozessor der Steuervorrichtung
154 Kommunikationsvorrichtung
160 Kontakteingabevorrichtung
- 200: Transportvorrichtung
- 250: Vorrichtung zur Bearbeitung des entwerteten Wertdokuments
300 Vorrichtung zur Echtheitsverifizierung eines entwerteten Wertdokuments
310 Aufnahmevorrichtung
311 Vereinzeler
314 Zuführvorrichtung
318 Transportvorrichtung
320 Ausgabevorrichtung
330 Sensorvorrichtung
331 Sensor
336 Transportpfad
340 Steuervorrichtung
341 Datenschnittstelle
345 Auswertevorrichtung
348 Prozessor
349 Speichereinrichtung
400 Vorrichtung zum Vernichten eines entwerteten Wertdokuments
- 500: Datenbank
- 1000: System
- S100: Verfahrensschritt "Zuführen eines Wertdokuments"
- S101: Verfahrensschritt "Entwerten des Wertdokuments"
- S102: Verfahrensschritt "Erfassen von Sensordaten"
- S103: Verfahrensschritt "Registrieren des entwerten Wertdokuments"
- S300: Verfahrensschritt " Zuführen des entwerteten Wertdokuments"
- S301: Verfahrensschritt "Erfassen von Sensordaten "
- S302: Verfahrensschritt "Verifizieren zumindest eines der Sicherheitselemente"
- S303: Verfahrensschritt "Verifizieren einer Entwertung des Wertdokuments"

## Patentansprüche

1. Vorrichtung (100) zur Transportvorbereitung eines Wertdokuments, die Vorrichtung umfassend:
eine Aufnahmevorrichtung (110) zur Aufnahme des Wertdokuments;
eine Entwertungsvorrichtung (120), die eingerichtet ist, das Wertdokument irreversibel sichtbar zu entwerten;
eine Sammelvorrichtung (130), zum Ablegen des entwerteten Wertdokuments für einen Transport;
eine Sensorvorrichtung (140), die eingerichtet ist, Sensordaten zu erfassen, die das Wertdokument identifizieren; und
eine Steuervorrichtung (150), die eingerichtet ist, nach Entwertung des Wertdokuments das Wertdokument basierend auf den Sensordaten in einem unveränderlichen Eintrag auf einer Datenbank (500) zu registrieren.

2. Vorrichtung (100) nach Anspruch 1, wobei die Aufnahmevorrichtung (110) eingerichtet ist, eine Vielzahl von Wertdokumenten aufzunehmen, und/oder die Vorrichtung ferner eine Zuführvorrichtung zur Zuführung von einzelnen oder vereinzelten Wertdokumenten zur Entwertungsvorrichtung umfasst.

3. Vorrichtung (100) nach Anspruch 1 oder 2, ferner umfassend eine Kontakteingabevorrichtung (160) zur Eingabe eines Kontakts des Besitzers des Wertdokuments oder der Vielzahl von Wertdokumenten, wobei die Steuervorrichtung (150) ferner eingerichtet ist, in dem unveränderlichen Eintrag auf der Datenbank (500) den Kontakt des Besitzers in Bezug zu den Sensordaten zu registrieren.

4. Vorrichtung (100) nach einem der vorhergehenden Ansprüche, wobei die Sensordaten einen Identifikator des Wertdokuments und einen Wert des Wertdokuments umfassen, wobei vorzugsweise der Identifikator des Wertdokuments den Wert des Wertdokuments umfasst.

5. Vorrichtung (100) nach einem der vorhergehenden Ansprüche, ferner umfassend eine Speichervorrichtung (152), in der die Datenbank (500) gespeichert ist.

6. Vorrichtung (100) nach einem der vorhergehenden Ansprüche, ferner umfassend eine Kommunikationsvorrichtung (154) zur Datenkommunikation mit einem externen Server, wobei die Datenbank (500) auf dem externen Server verwaltet wird, und die Steuervorrichtung (150) ferner eingerichtet ist, die Sensordaten, vorzugsweise den Identifikator, des Wertdokuments und, falls abhängig von Anspruch 3, den Kontakt des Besitzers über die Kommunikationsvorrichtung dem externen Server zu übermitteln.

7. Vorrichtung (100) nach einem der Ansprüche 3 bis 6, wobei die Steuervorrichtung (150) ferner eingerichtet ist, Instruktionen zur Veranlassung einer Auszahlung des Werts des Wertdokuments an den Besitzer bereitzustellen.

8. Vorrichtung (100) nach Ansprüche 3, 4, 6 oder 7, wobei die Steuervorrichtung (150) ferner eingerichtet ist, basierend auf dem Identifikator einen selbstausführenden Vertrag, vorzugsweise zur Auszahlung des Werts des Wertdokuments an den Besitzer bedingt durch eine erfolgreiche Echtheitsprüfung des Wertdokuments, in den unveränderlichen Eintrag der Datenbank (500) zu registrieren.

9. Vorrichtung (100) nach einem der vorhergehenden Ansprüche, wobei die Entwertungsvorrichtung (120) eingerichtet ist, das Wertdokument wie folgt zu entwerten:
Zerstören eines vorbestimmten Sicherheitselements des Wertdokuments;
Entfernen eines Ausschnitts, vorzugsweise eines vorbestimmten Musters, aus dem Wertdokument; und/oder
Verändern eines Druckbildes des Wertdokuments.

10. Verfahren zum Vernichten eines Wertdokuments, das Verfahren umfassend in folgender Reihenfolge:
Irreversibles und sichtbares Entwerten des Wertdokuments;
Registrieren des entwerten Wertdokuments in einem unveränderlichen Eintrag einer Datenbank (500);
Transportieren des entwerteten Wertdokuments;
Verifizieren der Echtheit des entwerteten Wertdokuments; und
Vernichten des Wertdokuments.

11. Verfahren nach Anspruch 10, ferner umfassend:
Veranlassen einer Auszahlung des Wertes des Wertdokuments nach dem irreversiblen und sichtbaren Entwerten des Wertdokuments.

12. Verfahren nach Anspruch 10 oder 11, wobei das Registrieren des entwerteten Wertdokuments ferner Folgendes umfasst:
Erfassen von Sensordaten, die das Wertdokument identifizieren, wobei die Sensordaten vorzugsweise einen Identifikator des Wertdokuments und einen Wert des Wertdokuments umfassen, wobei der Identifikator des Wertdokuments den Wert des Wertdokuments umfasst; und
Registrieren des Wertdokuments in dem unveränderlichen Eintrag der Datenbank basierend auf den Sensordaten.

13. Verfahren nach Anspruch 12, ferner umfassend:
Empfangen eines Kontakts eines Besitzers des Wertdokuments; und
Registrieren des Kontakts Besitzers in Bezug zum Identifikator in dem unveränderlichen Eintrag der Datenbank, vorzugsweise in Form von Instruktionen zur Auszahlung des Werts des Wertdokuments an den Besitzer bedingt durch eine erfolgreiche Echtheitsprüfung des Wertdokuments.

14. Verfahren zur Transportvorbereitung eines Wertdokuments, das Verfahren umfassend:
Zuführen eines Wertdokuments;
Entwerten des Wertdokuments durch:
Zerstören eines vorbestimmten Sicherheitselements des Wertdokuments,
Entfernen eines Ausschnitts, vorzugsweise eines vorbestimmten Musters, aus dem Wertdokument; und/oder
Verändern eines Druckbildes des Wertdokuments;
Erfassen von Sensordaten, die das Wertdokument identifizieren; und
Registrieren des entwerten Wertdokuments in einem unveränderlichen Eintrag einer Datenbank (500) basierend auf den Sensordaten.

15. Verfahren nach Anspruch 14, wobei die Sensordaten vorzugsweise einen Identifikator des Wertdokuments und einen Wert des Wertdokuments umfassen, wobei der Identifikator des Wertdokuments den Wert des Wertdokuments umfasst, wobei das Verfahren ferner umfasst:
Empfangen eines Kontakts eines Besitzers des Wertdokuments; und
Registrieren des Kontakts des Besitzers in Bezug zu den Sensordaten in der Datenbank (500); und vorzugsweise:
Erzeugen von Instruktionen zur Veranlassung einer Auszahlung des Werts des Wertdokuments an den Besitzer; und
Bereitstellen der Instruktionen, vorzugsweise durch Registrieren eines selbstausführenden Vertrags zur Auszahlung des Werts des Wertdokuments an den Besitzer bedingt durch eine erfolgreiche Echtheitsprüfung des Wertdokuments in dem unveränderlichen Eintrag der Datenbank (500).
